# EUROPÄISCHE PATENTSCHRIFT

(11) **EP 2 483 650 B1**
(45) Veröffentlichungstag und Bekanntmachung des Hinweises auf die Patenterteilung: **09.11.2016**
(21) Anmeldenummer: 10762871.1
(22) Anmeldetag: 27.09.2010
(51) Int. Cl.: G01K 1/02, G01K 1/14, G01K 3/14, G01K 11/32, B22D 11/18

(54) **SENSORELEMENT ZUR MESSUNG EINES TEMPERATURGRADIENTEN**
SENSOR ELEMENT FOR MEASURING A TEMPERATURE GRADIENT
ELÉMENT CAPTEUR SERVANT À MESURER UN GRADIENT DE TEMPÉRATURE

(30) Priorität: 30.09.2009 DE 102009043540; 30.09.2009 DE 102009043541; 28.12.2009 DE 102009060639
(43) Veröffentlichungstag der Anmeldung: 08.08.2012
(73) Patentinhaber: SMS group GmbH, 40237 Düsseldorf (DE)
(72) Erfinder: LIEFTUCHT, Dirk, 48739 Legden (DE); FEHLEMANN, Gereon, 40489 Düsseldorf (DE); REIFFERSCHEID, Markus, 41352 Korschenbroich (DE); LAMBERTI, Thomas, 40591 Düsseldorf (DE); ARZBERGER, Matthias, 45470 Mühlheim a.d. Ruhr (DE)
(74) Vertreter: Kross, Ulrich
(86) Internationale Anmeldenummer: PCT/EP2010/005884
(87) Internationale Veröffentlichungsnummer: WO 2011/038876

(56) Entgegenhaltungen:
- DE-U1- 29 820 671
- JP-A- 2006 257 458
- US-A- 4 522 247
- US-A1- 2006 133 450
- US-B1- 6 527 441

## Beschreibung

Die Erfindung betrifft ein Bauteil einer metallurgischen Anlage mit einem Sensorelement zur Messung eines Temperaturgradienten in einer Messrichtung, wobei das Sensorelement einen Grundkörper aufweist, an oder in dem in definiertem Abstand mindestens zwei Lichtwellenleiter angeordnet sind.

Für eine Überwachung der Bauteile einer metallurgischen Anlage sind unter anderem deren Temperatur und der Wärmestrom von Interesse. Der Wärmestrom kann aufgrund eines ermittelten Temperaturgradienten in einem Bereich des Bauteils bestimmt werden. Die Ermittlung des Temperaturgradienten kann grundsätzlich stattfinden, indem die Temperaturen an zwei Orten gemessen werden, die in einem definierten Abstand zueinander angeordnet sind.

Bislang werden hierbei Thermoelemente stets einzeln in entsprechende Bohrungen eingesetzt, die in das zu messende Bauteil eingearbeitet sind. Eine solche Lösung ist dabei immer für den speziellen Einzelfall anzufertigen, d. h. sie ist kundenspezifisch.

Soll ein Wärmestrom ein einem Bauteil ermittelt werden, müssen also zwei Temperaturfühler in einem konstanten und definierten Abstand zueinander in dem zu messenden Bauteil positioniert werden. Bei vorbekannten Lösungen werden hierzu zwei Bohrungen für zwei Temperatursensoren in das Bauteil eingebracht.

Dabei ergibt sich das Problem, dass die beiden Bohrungen im Bauteil in einem sehr genauen Abstand zueinander eingearbeitet werden müssen. Wenn beispielsweise der Abstand der Temperaturfühler 6 mm betragen soll, so erzeugt ein Verlaufen der Bohrungen relativ zueinander von nur 0,6 mm bereits eine Abweichung der Messergebnisse von 10 %.

Die Druckschrift US 4,522,247 beschreibt eine Vorrichtung und ein Verfahren zur Ermittlung der Parameter, welche dem Emissionsausstoß einer Metallschmelze in einem elektromagnetischen Gießsystem bewirken. Mit einer Vielzahl von Lichtwellenleitern wird die Infrarotstrahlung an der Oberfläche der Metallschmelze gemessen, wobei die Lichtwellenleiter im Inneren des elektromagnetischen Gießsystems gesichert sind.

Die Druckschrift US 2006/0133450 A1 beschreibt einen Hohlfaser-Lichtwellenleiter, der in einem bestimmten Bereich mit den Glasfasern des Lichtwellenleiters konzentriert zur Messung der Temperatur in einem vorgegebenen Raum ausgebildet ist. Dabei ist die Glasfaser spiralförmig um die Hohlfaser gewickelt.

Aus der JP 2006257458 ist ein Verfahren zur Ermittlung des Verschleißes an einer Schmelzpfanne für Eisen bekannt. Dazu sind zur Temperaturermittlung Lichtwellenleiter in Längsrichtung in die beiden Seitenteile und in den Boden einer Ausgussrinne vorgesehen. Aufgrund von gemessenen Temperaturabweichungen in Längs- und Querrichtung der Rinne werden Rückschlüsse über den Verschleiß ermittelt.

Der vorliegenden Erfindung liegt die Aufgabe zugrunde, ein Sensorelement der eingangs genannten Art so fortzubilden, dass es in einfacher Weise herstellbar ist und sich durch einen hohe Messgenauigkeit eines Temperaturgradienten auszeichnet. Ferner wird die Schaffung eines Bauteils einer metallurgischen Anlage mit einem solchen Sensorelement angestrebt, dessen Temperaturgradient in besonders einfacher und genauer Weise ermittelbar ist. Es wird also eine genaue Messung des Temperaturgradienten mit einfachen Mitteln angestrebt.

Die Lösung dieser Aufgabe durch die Erfindung ist dadurch gekennzeichnet, dass der Grundkörper eine längliche Stabform mit einer Mittenachse aufweist, wobei der Grundkörper zumeist zwei diametral gegenüberliegende Nuten oder Bohrungen aufweist, und Lichtwellenleiter jeweils in den Nuten oder Bohrungen, die in Richtung der Mittenachse verlaufen, angeordnet sind, wobei das Sensorelement in einer Bohrung im Bauteil der metallurgischen Anlage angeordnet ist.

Das Sensorelement ist vorzugsweise zur Ermittlung von lokalen Wärmestromdichten bzw. Wärmeströmen ausgebildet ist, wobei die Lichtwellenleiter mit einer Auswerteeinrichtung in Verbindung stehen.

Besonders bevorzugt weist der Grundkörper eine zylindrische Gestalt auf.

Die mindestens zwei Lichtwellenleiter können in parallel zueinander verlaufenden Bohrungen im Grundkörper angeordnet sein.

Sie können alternativ aber auch in parallel zueinander verlaufenden Nuten in der Oberfläche des Grundkörpers angeordnet sein.

Die mindestens zwei Lichtwellenleiter können auch in je einem diese umgebenden Rohr angeordnet sein.

Der Grundkörper des Sensorelements besteht bevorzugt aus Kupfer, einer Kupferlegierung oder aus Stahl.

Das vorgeschlagene Bauteil einer metallurgischen Anlage mit einem Sensorelement der oben genannten Ausgestaltung zeichnet sich also dadurch aus, dass das Sensorelement in einer Bohrung im Bauteil der metallurgischen Anlage angeordnet ist.

Das Sensorelement kann dabei mit Übergangs- oder Presspassung in der Bohrung im Bauteil der metallurgischen Anlage angeordnet sein.

Eine alternative oder additive Ausgestaltung sieht vor, dass das Sensorelement mit Schrumpfsitz in der Bohrung im Bauteil der metallurgischen Anlage angeordnet ist, was durch einen thermischen Fügeprozess erreichbar ist.

Die vorliegende Erfindung befasst sich also insbesondere mit der kontinuierlichen Messung von Wärmeströmen, Temperaturen bzw. Dehnungen zur Bestimmung der mechanischen bzw. thermischen Belastung von Bauteilen sowie der Ableitung von sekundären Prozessgrößen, die auch zur Regelung (beispielsweise der Gießgeschwindigkeit, der Kühlwassermenge oder der Gießpulvermenge) dienen.

Durch das Zusammenfassen mehrerer Temperaturmessstellen zu einer Einheit entsteht ein modulares Element zur Ermittlung des Wärmestroms und der lokalen Wärmestromdichte. Diese modularen Elemente dienen dann als Standardsensoren zur lokalen Bestimmung der genannten Größen.

Das als Standardsensor verwendbare Sensorelement gemäß der Erfindung stellt einen konstanten Abstand der Temperaturfühler zur präzisen Bestimmung des Wärmestroms sicher.

Es wird eine modularisierte Bauweise des Sensorelements möglich, die als universell einsetzbares Modul verwendet werden kann. Dies hat in vorteilhafter Weise eine Standardisierung zur Folge.

Das vorgeschlagene Sensorelement stellt sicher, dass alle Temperaturmessstellen direkten Kontakt zum Grundmaterial des zu messenden Bauteils besitzen. Dadurch wird eine Verfälschung des Messergebnisses durch wärmedämmende Schichten (z. B. auch einer Luftschicht) zwischen dem Sensor und dem zu messenden Bauteil verhindert.

Die vorgeschlagene Lösung stellt also insbesondere darauf ab, dass zwei oder mehr Lichtwellenleiter in einen länglichen Stab mit beliebigem Querschnitt eingebracht werden, beispielsweise auf den Wandungen des Stabes. Dieser Stab wird in eine Ausnehmung bzw. Bohrung oder eine Nut so in das zu messende Bauteil eingeführt, dass die Lichtwellenleiter an dem Material des zu messenden Bauteils fest anliegen. Das Einbringen erfolgt durch eine passgenaue Fertigung, eventuell auch in Kombination mit einem Schrumpfprozess (z. B. durch Abkühlen des Sensorelements mittels flüssigen Stickstoffs).

So wird eine Temperaturmessung ohne störende Grenzflächen möglich, d. h. es liegt ein direkter Kontakt der Temperaturmesselemente zum Grundmaterial des zu messenden Bauteils vor.

Der Stab kann aus dem gleichen Material wie das zu messende Bauteil (bei Kokillen meist Kupfer oder eine Kupfer-Legierung) oder auch aus einem anderen Material (z. B. aus Edelstahl) sein.

Ein so ausgebildetes Sensorelement kann mithin als Standardsensor bezeichnet werden.

Durch das Einbringen von Lichtwellenleitem in die Wandungen des Sensor-grundkörpers können Temperaturmessungen in unterschiedlichen Schichten des Bauteils als Temperaturprofil über die Oberfläche des zu messenden Bauteils erfolgen. Aus den gemessenen Temperaturunterschieden zwischen den beiden Lichtwellenleitern kann ein Wärmestrom berechnet bzw. ermittelt bzw. auf diesen geschlossen werden.

Das vorgeschlagene Konzept ermöglicht eine Darstellung der thermischen Belastung (bezüglich Temperaturen und Wärmeströmen) der gemessenen Bauteile über ihre Oberfläche im jeweiligen Betriebszustand.

Wenn das Sensorelement passgenau in das zu messende Bauteil eingebracht wird, ist es auch denkbar, dass die Temperaturfühler nicht auf die Wandung des Sensorgrundkörpers angebracht werden, sondern in Bohrungen mit einem kleinen Durchmesser (von z. B. 0,4 bis 2,0 mm) äquidistant eingeführt werden.

Die Lichtwellenleiter werden so auf den Sensorgrundkörper aufgebracht, dass die Messsensoren in direktem Kontakt mit der Grundeinheit stehen. Die Sensoreinheit gibt einen sehr genauen Abstand zwischen den beiden Doppelthermoelementen vor. Eine Modularisierung der einzelnen Messstellen zur Erstellung von Standardsensoren ist möglich.

Durch das Anbringen von Dichtungselementen an das Sensorelement kann die Messeinheit gegenüber dem Kühlmedium (zumeist Wasser) abgedichtet werden, so dass das Kühlmedium nicht in die Messeinheit eindringen kann und das Messergebnis verfälscht.

Zur Einbringung des Sensorelements (des Standardsensors) in das zu messende Bauteil gibt es also zwei bevorzugte Möglichkeiten: Es kann eine Einbringung durch eine oder mehrere Bohrungen im zu vermessenden Bauteil erfolgen. Alternativ kann die Einbringung in eine Nut im zu messenden Bauteil erfolgen, wobei die Nut nach dem Einbringen des Sensorelements wieder verschlossen werden kann.

Zur Einbringung der Lichtwellenleiter in das Sensorelement sind also zwei Möglichkeiten bevorzugt: Die Einbringung kann in Bohrungen erfolgen, die in den Sensorgrundkörper eingearbeitet worden sind. Es ist auch eine Einbringung in einen Wandungsbereich des Sensorgrundkörpers möglich, insbesondere in eine Nut, die in der Wandung des Sensorgrundkörpers verläuft.

Zur Messung eines Wärmestroms werden die Lichtwellenleiter mit ihrem definierten Abstand in Wärmestromrichtung hintereinander angeordnet.

Es ist aber auch denkbar, das Sensorelement um 90° um die Längsachse des Sensorelements zu drehen. In diesem Falle fungiert das Sensorelement als Temperaturmesseinheit mit zwei Temperaturfühlern, von denen einer redundant ist, was die Messsicherheit entsprechend erhöht.

In der Zeichnung sind Ausführungsbeispiele der Erfindung dargestellt. Es zeigen:
- Fig. 1: ein Bauteil einer metallurgischen Anlage, in das ein Sensorelement zur Messung eines Wärmestroms eingebaut ist,
- Fig. 2: das Sensorelement im demontierten Zustand,
- Fig. 3: den Schnitt A-B gemäß Fig. 2 durch das Sensorelement und
- Fig. 4: den Schnitt A-B gemäß Fig. 2 durch das Sensorelement für eine alternative Ausgestaltung der Erfindung.

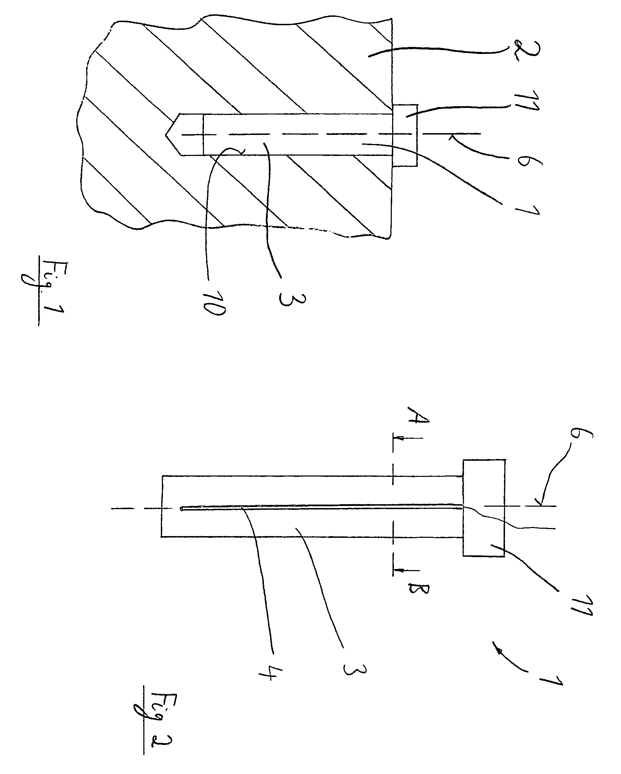

In den Figuren 1 und 2 ist ein Sensorelement 1 zu sehen, mit dem ein Wärmestrom ermittelt werden kann, der durch ein in Fig. 1 dargestelltes Bauteil 2 einer metallurgischen Anlage fließt. Das Sensorelement 1 weist einen Grundkörper 3 auf, an dessen Oberseite ein Kopf 11 angeordnet ist. Der Grundkörper 3 ist vorliegend zylindrisch ausgebildet und in einer Bohrung 10 im Bauteil 2 angeordnet.

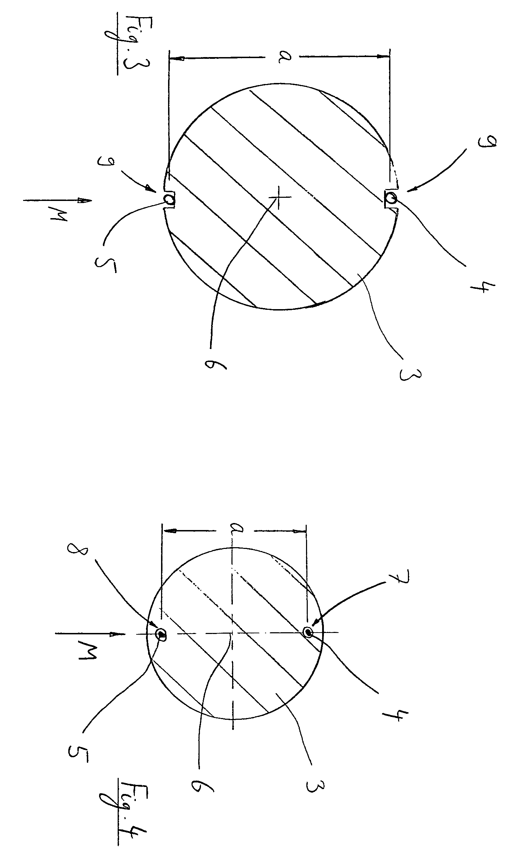

Zur Messung eines Temperaturgradienten, d. h. zweier Temperaturen, die an zwei definiert beabstandeten Orten vorliegen, ist vorgesehen, dass an oder in dem Sensorelement 1 in definiertem Abstand zwei Lichtwellenleiter 4 und 5 angeordnet sind, die mit einer Auswerteeinrichtung verbindbar sind. Dies geht am besten anhand des Schnitts A-B hervor, der für das in Fig. 2 skizzierte Sensorelement 1 in Fig. 3 dargestellt ist. Der Grundkörper 3 weist an zwei diametral gegenüberliegenden Stellen je eine Nut 9 auf, die sich in Richtung der Mittenachse 6 erstrecken. In den Nuten 9 sind die Lichtwellenleiter 4 bzw. 5 angeordnet. Nicht dargestellt ist, dass die sich durch die Nuten 9 ergebenden Öffnungen nach Platzierung der Lichtwellenleiter 4, 5 wieder mit einem geeigneten Verschlussmaterial verschlossen werden können.

In Fig. 3 ist auch zu sehen, dass in eine Messrichtung M der Temperaturgradient gemessen werden kann, da sich die beiden Lichtwellenleiter 4, 5 in einem Abstand a befinden. Der ermittelbare Temperaturgradient hat folglich die Einheit Kelvin/Meter.

In Fig. 4 ist eine alternative Lösung zu sehen, bei der in den Grundkörper 3 des Sensorelements 1 zwei Bohrungen 7 und 8 eingearbeitet sind, die in Richtung der Mittenachse 6 verlaufen. In die Bohrungen 7, 8 sind dann die Lichtwellenleiter 4, 5 eingeschoben.

Die Lichtwellenleiter 4, 5 bestehen aus einer Grundfaser, die eine Dicke im Bereich zwischen ca. 100 bis 150 µm aufweist. Möglich ist es dabei, dass die Lichtwellenleiter in einem Hüllrohr angeordnet sind; dieses kann einen Durchmesser von ca. 800 bis 2.000 µm aufweisen.

Der Lichtwellenleiter 4, 5 besteht also aus einer Grundfaser, die mit oder ohne Hüllrohr in vorher erstellte Bohrungen 7, 8 oder Nuten 9 im Grundkörper 3 des Sensorelements 1 eingefasst oder eingelegt sind. Die Messfaser kann dabei Temperaturen bis zu 600 °C Dauerbelastung problemlos ertragen.

Um die Robustheit der Signalübertragung zu erhöhen, werden die Lichtwellen über sog. Linsenstecker von dem Sensorelement 1 zu einer nicht dargestellten Auswerteeinheit geführt.

Die als Bestandteil des Temperatursensors fungierende Glasfaser ist mit einem nicht dargestellten Temperaturerfassungssystem verbunden. Mittels des Erfassungssystems wird Laserlicht erzeugt, das in den Lichtwellenleiter 4, 5 eingespeist wird. Die von der Lichtwellenleitfaser 4, 5 gesammelten Daten werden mittels des Erfassungssystems in Temperaturen umgerechnet und den verschiedenen Messorten zugeordnet. Die Auswertung kann beispielsweise nach dem sog. Faser-Bragg-Gitter-Verfahren (FBG-Verfahren) erfolgen. Hierbei werden geeignete Lichtwellenleiter verwendet, die Messstellen mit einer periodischen Variation des Brechungsindexes bzw. Gitters mit solchen Variationen eingeprägt bekommen. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen können dann aufgrund von Laufzeitunterschieden voneinander unterschieden werden. Der detailierte Aufbau solcher Faser-Bragg-Gitter sowie die entsprechenden Auswerteeinheiten sind allgemein bekannt. Die Genauigkeit der Ortsauflösung ist durch die Anzahl der eingeprägten Messstellen gegeben. Die Größe einer Messstelle kann beispielsweise im Bereich von 1 mm bis 5 mm liegen.

Alternativ kann zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mittels der Auswerteeinheit (z. B. einem Raman-Reflektometer) können dann die Temperaturwerte entlang einer Faser ortsaufgelöst bestimmt werden, wobei bei diesem Verfahren über eine bestimmte Länge des Leiters gemittelt wird. Diese Länge beträgt ca. einige Zentimeter. Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb des Lichtwellenleiters 4, 5 erzeugen.

Eine exemplarische Anwendung der vorgeschlagenen Lösung ist eine Kokille einer Stranggießanlage, in der der fließende Wärmestrom bekannt sein muss.

### Bezugszeichenliste:

- 1: Sensorelement
- 2: Bauteil
- 3: Grundkörper
- 4: Lichtwellenleiter
- 5: Lichtwellenleiter
- 6: Mittenachse
- 7: Bohrung
- 8: Bohrung
- 9: Nut
- 10: Bohrung
- 11: Kopf

- M: Messrichtung
- a: Abstand

## Patentansprüche

1. Bauteil (2) einer metallurgischen Anlage mit einem Sensorelement (1) zur Messung eines Temperaturgradienten in einer Messrichtung (M), wobei das Sensorelement (1) einen Grundkörper (3) aufweist, an oder in dem in definiertem Abstand (a) mindestens zwei Lichtwellenleiter (4, 5) zur Temperaturmessung angeordnet sind,
**dadurch gekennzeichnet, dass**
der Grundkörper (3) eine längliche Stabform mit einer Mittenachse (6) aufweist, wobei der Grundkörper (3) zumeist zwei diametral gegenüberliegende Nuten (9) oder Bohrungen (7, 8) aufweist, und die Lichtwellenleiter (4, 5) jeweils in den Nuten (9) oder Bohrungen (7, 8), die in Richtung der Mittenachse (6) verlaufen, angeordnet sind, wobei das Sensorelement (1) in einer Bohrung (10) im Bauteil (2) der metallurgischen Anlage angeordnet ist.

2. Bauteil nach Anspruch 1, **dadurch gekennzeichnet, dass** das Sensorelement zur Ermittlung von lokalen Wärmestromdichten bzw. Wärmeströmen ausgebildet ist, wobei die Lichtwellenleiter (4, 5) mit einer Auswerteeinrichtung in Verbindung stehen.

3. Bauteil nach Anspruch 2,
**dadurch gekennzeichnet,**
**dass** der Grundkörper (3) eine zylindrische Gestalt aufweist.

4. Bauteil nach einem der Ansprüche 1 bis 3,
**dadurch gekennzeichnet,**
**dass** die mindestens zwei Lichtwellenleiter (4, 5) in parallel zueinander verlaufenden Bohrungen (7, 8) im Grundkörper (2) angeordnet sind.

5. Bauteil nach einem der Ansprüche 1 bis 4,
**dadurch gekennzeichnet,**
**dass** die mindestens zwei Lichtwellenleiter (4, 5) in parallel zueinander verlaufenden Nuten (9) in der Oberfläche des Grundkörpers (3) angeordnet sind.

6. Bauteil nach einem der Ansprüche 1 bis 5,
**dadurch gekennzeichnet,**
**dass** die mindestens zwei Lichtwellenleiter (4, 5) in je einem diese umgebenden Rohr angeordnet sind.

7. Bauteil nach einem der Ansprüche 1 bis 6,
**dadurch gekennzeichnet,**
**dass** der Grundkörper (2) aus Kupfer, einer Kupferlegierung, Stahl oder Kunststoff besteht.

8. Bauteil nach einem der Ansprüche 1 bis 7,
**dadurch gekennzeichnet,**
**dass** das Sensorelement (1) mit Übergangs- oder Presspassung in der Bohrung (10) im Bauteil (2) der metallurgischen Anlage angeordnet ist.

9. Bauteil nach einem der Ansprüche 1 bis 7,
**dadurch gekennzeichnet,**
**dass** das Sensorelement (1) mit Schrumpfsitz in der Bohrung (10) im Bauteil (2) der metallurgischen Anlage angeordnet ist.

## Claims

1. Component (2) of a metallurgical plant with a sensor element (1) for measuring a temperature gradient in a measuring direction (M), wherein the sensor element (1) comprises a base body (3) at or in which at least two optical waveguides (4, 5) for temperature measurement are arranged at a defined spacing (a),
**characterised in that**
the base body (3) has an elongate rod shape with a centre axis (6), wherein the base body (3) has for the most part two diametrically opposite grooves (9) or bores (7, 8) and the optical waveguides (4, 5) are respectively arranged in the grooves (9) or bores (7, 8), which extend in the direction of the centre axis (6), wherein the sensor element (1) is arranged in a bore (10) in the component (2) of the metallurgical plant.

2. Component according to claim 1, **characterised in that** the sensor element is constructed for detecting local heat flow densities or heat flows, wherein the optical waveguides (4, 5) are connected with an evaluating device.

3. Component according to claim 2, **characterised in that** the base body (3) has a cylindrical shape.

4. Component according to any one of claims 1 to 3, **characterised in that** the at least two optical waveguides (4, 5) are arranged in bores (7, 8), which extend parallel to one another, in the base body (2).

5. Component according to any one of claims 1 to 4, **characterised in that** the at least two optical waveguides (4, 5) are arranged in grooves (9), which extend parallelly to one another, in the surface of the base body (3).

6. Component according to any one of claims 1 to 5, **characterised in that** the at least two optical waveguides (4, 5) are each arranged in a respective surrounding tube.

7. Component according to any one of claims 1 to 6, **characterised in that** the base body (2) thereof consists of copper, a copper alloy, steel or synthetic material.

8. Component according to any one of claims 1 to 7, **characterised in that** the sensor element (1) is arranged by a transition fit or press fit in the bore (10) in the component (2) of the metallurgical plant.

9. Component according to any one of claims 1 to 7, **characterised in that** the sensor element (1) is arranged with a shrink fit in the bore (10) in the component (2) of the metallurgical plant.

## Revendications

1. Composant (2) d'une installation métallurgique comprenant un élément (1) faisant office de capteur pour la mesure d'un gradient de températures dans une direction de mesure (M), l'élément (1) faisant office de capteur présentant un corps de base (3) contre lequel ou dans lequel sont disposés, à une distance définie (a), au moins deux câbles à fibres optiques (4, 5) pour la mesure de la température, **caractérisé en ce que** le corps de base (3) présente une configuration en forme de barre longitudinale comprenant un axe médian (6), le corps de base (3) présentant au maximum deux rainures (9) ou deux alésages (7, 8) opposés en direction diamétrale, et les câbles à fibres optiques (4, 5) sont disposés respectivement dans les rainures (9) ou dans les alésages (7, 8) qui s'étendent dans la direction de l'axe médian (6), l'élément (1) faisant office de capteur étant disposé dans un alésage (10) dans le composant (2) de l'installation métallurgique.

2. Composant selon la revendication 1, **caractérisé en ce que** l'élément faisant office de capteur est conçu pour la détermination de densités locales de flux thermiques, respectivement de flux thermiques locaux, les câbles à fibres optiques (4, 5) étant mis en relation avec un mécanisme d'évaluation.

3. Composant selon la revendication 2, **caractérisé en ce que** le corps de base (3) présente une configuration de forme cylindrique.

4. Composant selon l'une quelconque des revendications 1 à 3, **caractérisé en ce que** lesdits au moins deux câbles à fibres optiques (4, 5) sont disposés dans des alésages (7, 8) s'étendant parallèlement l'un à l'autre, dans le corps de base (2).

5. Composant selon l'une quelconque des revendications 1 à 4, **caractérisé en ce que** lesdits au moins deux câbles à fibres optiques (4, 5) sont disposés dans des rainures (9) s'étendant parallèlement l'une à l'autre dans la surface du corps de base (3).

6. Composant selon l'une quelconque des revendications 1 à 5, **caractérisé en ce que** lesdits au moins deux câbles à fibres optiques (4, 5) sont disposés dans respectivement un tube qui les entoure.

7. Composant selon l'une quelconque des revendications 1 à 6, **caractérisé en ce que** le corps de base (2) est constitué de cuivre, d'un alésage à base de cuivre, d'acier ou d'une matière synthétique.

8. Composant selon l'une quelconque des revendications 1 à 7, **caractérisé en ce que** l'élément (1) faisant office de capteur est disposé via un ajustement de transition ou un ajustement avec serrage dans l'alésage (10) dans le composant (2) de l'installation métallurgique.

9. Composant selon l'une quelconque des revendications 1 à 7, **caractérisé en ce que** l'élément (1) faisant office de capteur est disposé via un ajustement fretté dans l'alésage (10) dans le composant (2) de l'installation métallurgique.
